# EUROPEAN PATENT SPECIFICATION

(11) **EP 3 404 805 B1**
(45) Date of publication and mention of the grant of the patent: **25.10.2023**
(21) Application number: 17738518.4
(22) Date of filing: 13.01.2017
(51) Int. Cl.: H02K 5/04, H02K 1/12, H02K 5/22, H02K 3/46, H02K 7/116, H02K 11/30, H02K 3/28, H02K 3/52

(54) **BRUSHLESS MOTOR AND MOTOR WITH SPEED REDUCTION MECHANISM**
BÜRSTENLOSER MOTOR UND MOTOR MIT DREHZAHLVERMINDERUNGSMECHANISMUS
MOTEUR SANS BALAI ET MOTEUR À MÉCANISME RÉDUCTEUR DE VITESSE

(30) Priority: 15.01.2016 JP 2016005730
(43) Date of publication of application: 21.11.2018
(73) Proprietor: Mitsuba Corporation, Kiryu-shi, Gunma 376-8555 (JP)
(72) Inventor: OHORI Ryo, Kiryu-shi Gunma 376-8555 (JP); NEGISHI Toshihiro, Kiryu-shi Gunma 376-8555 (JP)
(74) Representative: Hoffmann Eitle
(86) International application number: PCT/JP2017/000971
(87) International publication number: WO 2017/122766

(56) References cited:
- EP-A2- 2 395 638
- WO-A2-2008/027535
- JP-A- H09 215 248
- JP-A- 2001 103 698
- JP-A- 2008 131 682
- JP-A- 2010 028 909
- JP-A- 2010 093 977
- JP-U- S6 351 541
- JP-U- S57 133 265
- US-A1- 2001 018 027
- US-A1- 2012 098 366
- US-A1- 2014 117 797

## Description

### Technical Field

The present invention relates to a motor with speed reduction mechanism comprising a brushless motor and, more particularly, to arrangement and position of coil terminals of the brushless motor and a mounting part structure thereof.

### Background Art

Typically, in an inner-rotor type brushless motor, a stator around which coils are wound is disposed in a steel yoke, and a rotor having a magnet is rotatably provided inside the stator. An insulator is provided on the stator side as a component for insulation between a stator core and the coils as in JP 2013-38949 A. Each coil is wound around tooth of the stator core through the insulator. For electrical connection of the coils, the stator is attached with components called a terminal holder and a bus bar (see WO 2008/050637 A1). Each coil wound around the tooth is electrically connected to an external power supply or a controller through the terminal holder and bus bar.

US 2012/0098366 A1 discloses a drive apparatus. An electronic control unit including semiconductor modules and capacitors is disposed in the axial direction of a motor. The semiconductor modules are placed longitudinally and brought into contact with a heat sink. The vertical line to each of surfaces of semiconductor chips included in the semiconductor modules is perpendicular to the axial line of the motor. Accordingly, the capacitors are disposed so that at least a part of the capacitors overlap the semiconductor modules and heat sink in the axial direction of the motor. However, US 2012/0098366 A1 does at least not disclose the combination of features of appended claim 1 of the present application, according to which the two coil connection terminals disposed on the other connection part side with respect to the flat surface parts extend along the extending direction of the rotary shaft of the brushless motor from the end portion of the brushless motor with different lengths, and a shorter one of the two coil connection terminals having different extending lengths is disposed closer to the bottom surface side of the frame than the longer one is.

### Disclosure of the Invention

### Problems to be Solved by the Invention

However, in a conventional brushless motor using the terminal holder and bus bar, an insulating member (insulator) and an electrical connection component (terminal holder or bus bar) are formed separately, which disadvantageously increases the number of components and the number of processes/man-hours for assembly. When the electrical connection components are used, after winding is made around the stator core, it is necessary to perform winding connection for each phase by using the terminal holder and to connect the coils by using the bus bar. That is, "winding process -> electrical connection component assembly process -> winding connection process -> fusing or TIG welding process" need to be performed. Thus, the number of assembly processes is disadvantageously increased in a stator formation process, resulting in deterioration in productivity.

The stator can be formed without use of the above electrical connection components; in this case, however, the coil needs to be wound with a single stroke as in JP 2013-70577 A. However, in general, for the single-stroke winding, one portion largely protruding from the outer periphery of the stator core is formed as an area where an electrical connection terminal is provided. In the presence of such a protruding portion, it is difficult to satisfy size requirements in a compact-type motor disposed in a narrow space, such as a sunroof motor.

### Means for Solving the Problems

The present invention is defined by the appended independent claim. The dependent claims are directed to optional features and preferred embodiments.

A motor with a speed reduction mechanism according to the present invention comprises: a three-phase driven brushless motor, the brushless motor including: a stator having a motor case, serving also as a yoke, formed of a magnetic material, a stator core fixed to the inner peripheral side of the motor case, and a coil wound around the stator core; and a rotor having a magnet and rotatably disposed in the stator. The motor case has two parallel opposing flat surface parts opposing each other in a direction perpendicular to the axis of rotation of the rotor, and connection parts provided at both sides of the flat surface parts and connecting the flat surface parts. The stator has an insulator having three coil connection terminals connected with the winding. One of the three coil connection terminals is disposed on one connection part side with respect to the flat surface parts and the remaining two coil connection terminals are disposed on the other connection part side with respect to the flat surface parts. In this case, one of the coil connection terminals may be disposed at a position not adjacent to other coil connection terminals.

In the motor comprising the brushless motor according to the present invention, a terminal holder-integrated insulator provided with the coil connection terminals is used, and the three coil connection terminals are not disposed on a yoke flat surface part but distributed to the connection part side. This allows reduction in size/thickness of the brushless motor to make it possible to reduce the width across flats (distance between the flat surface parts) of the motor. Further, a single-stroke winding is enabled with a small number of crossovers.

The insulator may have coil winding parts around each of which the winding is wound and terminal mounting parts each mounted with the coil connection terminal. The terminal mounting parts may be disposed radially outside the coil winding parts. This eliminates the need for a nozzle for coil winding to perform "operation for avoiding the terminal", facilitating the winding work. Further, a guide part for guiding the winding may be formed radially outside the coil winding part behind which the terminal mounting part is absent.

The coil connection terminal may have an insertion part inserted into a terminal insertion hole formed in the terminal mounting part, a hook part connected with the winding, and an intermediate part connecting the hook part and the insertion part. The terminal mounting part may have a terminal guide part formed in the vicinity of the terminal insertion hole and holding the intermediate part of the coil connection terminal abutting thereagainst. With this arrangement, even when a tensile force is applied to the hook part, movement of the intermediate part is restricted, so that the intermediate part is prevented from being bent by the tensile force.

The winding may be wound/routed, starting from the coil connection terminal of a first phase disposed on the one connection part side, to a first-phase first coil existing at a position corresponding to the first-phase coil connection terminal, a first-phase second coil positioned opposite to the first-phase first coil, a second-phase first coil adjacent to the first-phase second coil, a second-phase second coil opposite to the second-phase first coil, a third-phase first coil adjacent to the second-phase second coil, and a third-phase second coil opposite to the third-phase first coil. In this case, the winding may be connected to the coil connection terminal of a second phase between the first-phase second coil and the second-phase first coil, connected to the coil connection terminal of a third phase between the second-phase second coil and the third-phase first coil, and connected to the first-phase coil connection terminal at the rear stage of the third-phase second coil. This enables a single stroke winding with a small number of crossovers.

The motor with the speed reduction mechanism according to the present invention further includes: a frame mounted with the brushless motor and accommodating therein a speed reduction mechanism and a control circuit, the speed reduction mechanism being connected to a rotary shaft of the brushless motor, speed-reducing rotation of the rotary shaft, and outputting the speed-reduced rotation to an output shaft, the control circuit being provided for controlling drive of the brushless motor; and three intermediate terminals fitted to the frame and each having one end electrically connected to the coil connection terminal and the other end electrically connected to the control circuit. Two of the three intermediate terminals are disposed so as to overlap each other in the vertical direction as viewed in the extending direction of the output shaft. In this case, two of the three intermediate terminals may be arranged on a first axis perpendicular to the rotary shaft, and another pair of the terminals may be arranged on a second axis perpendicular to the first axis.

In the present invention, when the intermediate terminals are disposed in the manner as described above, the layout area of the terminal connection parts is finely arranged as compared to a case where the three connection parts between the intermediate terminals and the coil connection terminals are arranged at random, whereby the terminal connection parts can be efficiently laid out.

In the motor with speed reduction mechanism, the two coil connection terminals disposed on the other connection part side with respect to the flat surface parts extend along the extending direction of the rotary shaft of the brushless motor from the end portion of the brushless motor with different lengths, and a shorter one of the two coil connection terminals having different extending lengths is disposed closer to the bottom surface side of the frame than the longer one is. Thus, a longer coil connection terminal at the near side (upper side) of an operator is first connected, and thereafter a short coil connection terminal disposed at the far side (lower side) is connected. As a result, in the terminal connection work, it is possible to perform connection of the shorter coil connection terminal while confirming the insertion state of the longer coil connection terminal, whereby it is possible to prevent erroneous assembly.

Further, the frame may have a terminal holding part that holds the intermediate terminal and a bearing holding part that holds a bearing that rotatably supports the rotary shaft of the brushless motor. The terminal holding part and the bearing holding part may be disposed so as to be deviated from each other in the rotary shaft direction. As a result, both the terminal holding part and the bearing holding part can be formed in a thick solid portion, increasing rigidity and durability of the frame.

### Advantages of the Invention

According to the motor comprising the brushless motor of the present invention, a terminal holder-integrated insulator provided with the coil connection terminals is used, and the three coil connection terminals are not disposed on a yoke flat surface part but distributed to the connection part side. This allows reduction in size/thickness of the brushless motor.

Further, two pairs of the three intermediate terminals are arranged in a line so as to overlap in the vertical and lateral directions, respectively as viewed from the frame side. Thus, as compared to a case where the three connection parts between the intermediate terminals and the coil connection terminals are arranged at random, the terminal connection parts can be efficiently laid out.

### Brief Description of the Drawings

FIG. 1 is an explanatory view illustrating the configuration of a motor unit with a speed reduction mechanism using a brushless motor according to an embodiment of the present invention;
FIG. 2 is a side view of the brushless motor of FIG. 1 as viewed in the axial direction thereof;
FIG. 3 is an explanatory view illustrating the configuration of a stator in the brushless motor;
FIG. 4 is an explanatory view illustrating the configuration of a terminal mounting part in an insulator;
FIG. 5 is an explanatory view illustrating the terminal mounting part as viewed in the direction of the arrow P of FIG. 4;
FIG. 6 is a perspective view illustrating the configuration of a coil terminal;
FIG. 7 is a coil connection diagram;
FIG. 8 is an explanatory view illustrating a coil winding state;
FIG. 9 is a developed coil winding diagram;
FIG. 10 is an explanatory view illustrating a winding state of the last coil to be subjected to winding work;
FIG. 11 is an explanatory view illustrating a state where a winding is hooked to a pole provided in the vicinity of a terminal mounting part of the insulator;
FIG. 12 is an explanatory view illustrating the connection configuration between the coil terminal and an intermediate terminal;
FIG. 13 (a) is an explanatory view illustrating the positions of terminal connection parts in the motor unit according to the present invention; FIG. 13(b) is an explanatory view illustrating a state where three terminal connection parts are disposed at random;
FIG. 14 is an explanatory view illustrating the difference between long size and short size of each of the coil terminal and the intermediate terminal;
FIG. 15 is an explanatory view illustrating a modification in which the number of terminal mounting parts is reduced to two;
FIG. 16 is an explanatory view illustrating a modification using a coil terminal in which an insertion part and a hook part extend in the same direction; and
FIG. 17 is an explanatory view illustrating a configuration of the intermediate terminal where the intermediate terminal and the control board are connected by press-fitting.

### Best Mode for Carrying Out the Invention

Hereinafter, an embodiment of the present invention will be described in detail based on the drawings. An object of the present embodiment is to provide a slim-type brushless motor excellent in productivity. Another object of the present embodiment is to provide a motor with a speed reduction mechanism using a brushless motor, in which terminals connecting a motor side and a control part side are arranged with high space efficiency.

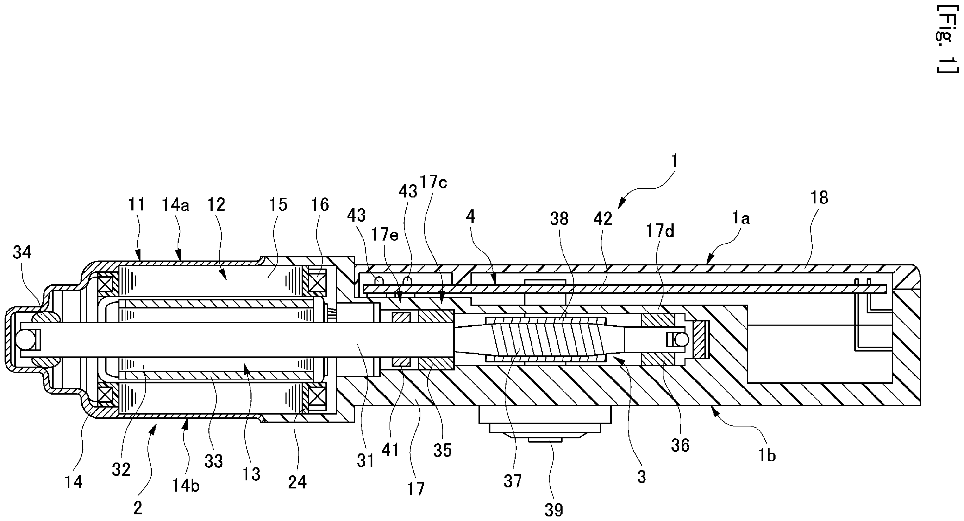

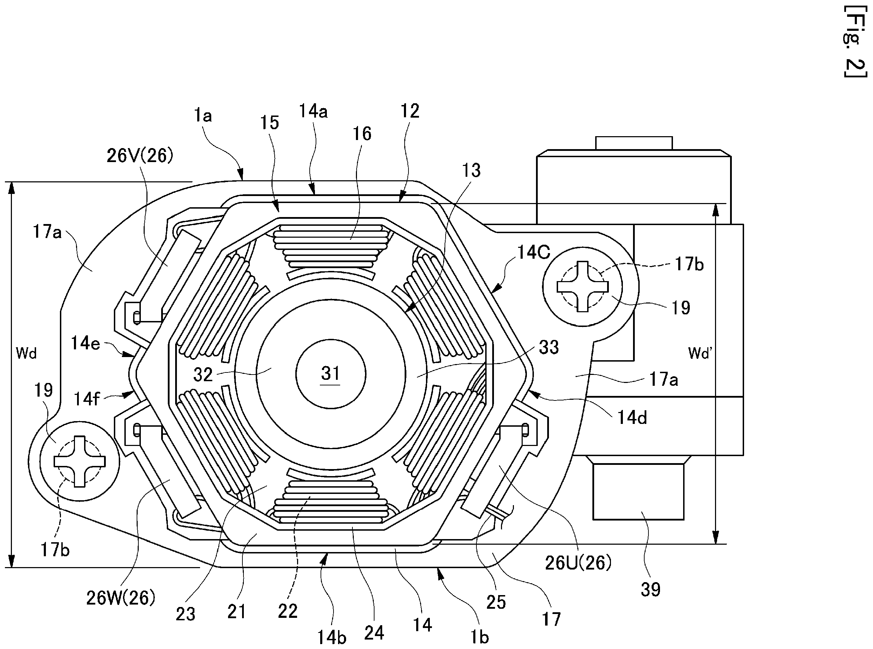

FIG. 1 is an explanatory view illustrating the configuration of a motor unit 1 with a speed reduction mechanism using a brushless motor 11 according to an embodiment of the present invention. FIG. 2 is a side view of the brushless motor 11 as viewed in the axial direction thereof. The motor unit 1 of FIG. 1 is an electromechanically integrated motor with a speed reduction mechanism in which a motor and a control part are integrated. The motor unit 1 includes a motor part 2 having the brushless motor 11, a speed reduction mechanism part 3 using a worm gear, and a control part 4 mounted with a control circuit for controlling drive of the brushless motor 11. The motor unit 1 is used for a drive source of, e.g., an electrical sunroof of a car.

The brushless motor 11 is provided in the motor part 2. The brushless motor 11 is an inner-rotor type brushless motor in which a stator 12 is provided outside a rotor 13. The stator 12 has a motor case 14 serving also as a yoke, a stator core (core member) 15 fixed to the inner peripheral side of the motor case 14, and coils 16 wound around the stator core 15. The motor case 14 is made of iron and formed into a bottomed cylindrical shape with a hexagonal cross section. An opening part of the motor case 14 is attached with a frame 17 made of synthetic resin. The upper part of the frame 17 is opened, and a cover 18 is fitted to the opening part. The motor case 14 is fixed by way of screws 19 fit into motor mounting screw holes 17b. The screw holes 17b are formed in flange parts 17a of the frame 17.

The stator core 15 has an integrated core structure in which a number of steel plates are laminated. The stator core 15 has a hexagonal yoke part 21 and a tooth part 22 formed so as to protrude inward from the yoke part 21. The tooth part 22 is provided in plural numbers (six, in this example) in the peripheral direction. A slot 23 (six, in this example) is formed between the adjacent tooth parts 22. An insulator 24 made of synthetic resin is fitted to the inner side of the stator core 15 from both end sides in the axial direction. A winding 25 is wound around each tooth part through the insulator 24 to thereby form a coil 16. The insulator 24 is provided with a coil terminal (coil connection terminal) 26 (26U, 26V, 26W) corresponding to each phase (three phases of U, V, and W, in this example). The coils 16 (windings 25) are electrically connected to their corresponding coil terminals 26U, 26V, and 26W.

The rotor 13 is disposed inside the stator 12. The rotor 13 has a configuration in which a rotary shaft 31, a rotor core 32, and a magnet 33 are coaxially disposed. A cylindrical-shaped rotor core 32 obtained by laminating a number of steel plates is fitted to the outer periphery of the rotary shaft 31. A magnet 33 magnetized to a plurality of poles along the peripheral direction is fixed to the outer periphery of the rotor core 32. One end portion of the rotary shaft 31 is rotatably supported by a bearing 34. The bearing 34 is press-fitted to the bottom part of the motor case 14. The other end portion of the rotary shaft 31 is rotatably supported by bearing metals 35 and 36. The bearing metals 35 and 36 are fitted to bearing holding parts 17c and 17d, respectively.

A worm 37 is formed at the end portion (right end portion in FIG. 1) of the rotary shaft 31. The worm 37 is engaged with a worm wheel 38 disposed inside the frame 17. The worm 37 and worm wheel 38 constitute a speed reduction mechanism part 3. The worm wheel 38 is fitted to an output shaft 39. In the motor unit 1, rotation of the rotary shaft 31 of the brushless motor 11 is speed-reduced by the speed reduction mechanism part 3 and transmitted to the output shaft 39, whereby the output shaft 39 is driven into rotation.

A sensor magnet 41 for detecting rotation of the rotor 13 is fitted to the rotary shaft 31. The sensor magnet 41 is magnetized to a plurality of poles along the peripheral direction. Non-illustrated Hall ICs (magnetism detection elements) are provided in the frame 17 so as to be opposed to the magnetic poles of the sensor magnet 41. The Hall IC is mounted on a control board 42 of the control part 4. In addition to the Hall IC, the control board 42 is mounted with elements such as a control IC, a resistor, and a capacitor. The control board 42 and the brushless motor 11 are electrically connected by an intermediate terminal (board connection terminal) 43. The intermediate terminal 43 is press-fixed to a terminal holding part 17e of the frame 17. The terminal holding part 17e is located at a position axially deviated from the bearing holding part 17c so that the terminal holding part 17e and the bearing holding part 17c do not axially overlap each other. As a result, both the terminal holding part 17e and the bearing holding part 17c can be formed in a thick solid portion, increasing rigidity and durability of the frame 17, which allows improvement in reliability and increase in output.

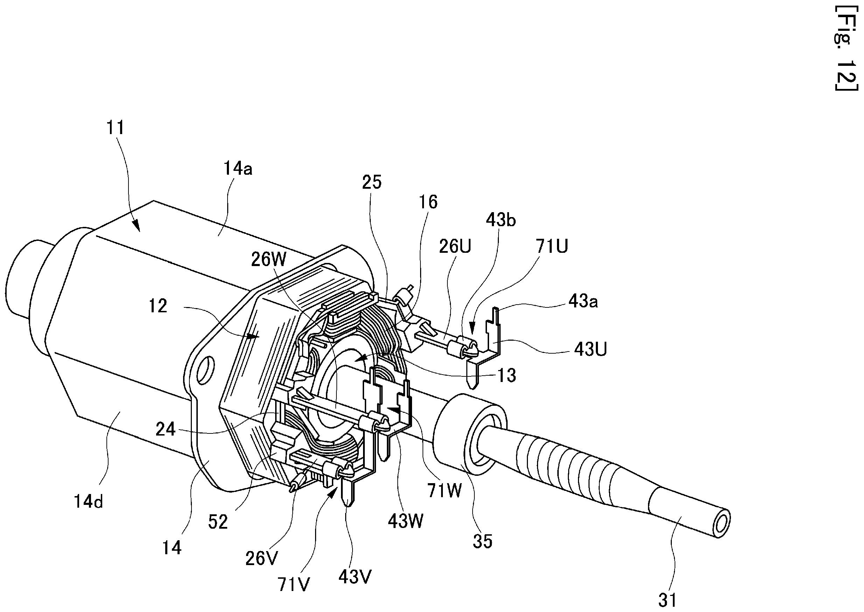

In the motor unit 1, by fitting the insulator 24 to the stator core 15, a stator assembly in which the coils 16 are wound/wired on the insulator 24 is formed. Then, the stator assembly is press-fitted to the frame 17, whereby the coil terminal 26 (26U, 26V, 26W) of the brushless motor 11 and one end side of the intermediate terminal 43 (43U, 43V, 43W; see FIG. 12) are fitted and electrically connected to each other. At this time, a load applied to the intermediate terminal 43 due to connection between the terminals is received by the terminal holding part 17e. After connection of the terminals 26 and 44, the control board 42 is assembled to the frame 17 and soldered to the other end side (board connection part 43a) of the intermediate terminal 43. As a result, the control board 42 and the brushless motor 11 are electrically connected, allowing the control part 4 to control drive of the brushless motor 11.

The brushless motor 11 according to the present invention has features different from those of conventional brushless motors in the following points.
(1) Arrangement of coil terminals of stator
(2) Coil terminal position
(3) Coil terminal mounting part structure in insulator
(4) Coil winding order
(5) Arrangement of intermediate terminals Below is given an explanation of the above-listed features.

### (1) Arrangement of Coil Terminal

As illustrated in FIG. 2, in the brushless motor 11, three-phase coil terminals 26U, 26V, and 26W are arranged so as to be accommodated in a width Wd across flats of the motor unit 1. The motor unit 1 is used under conditions where the installation width (height) is restricted, as a sunroof motor is. Thus, in order to satisfy size requirements for the sunroof motor, the coil terminals 26 are provided so as not to protrude from the width across flats.

The motor case 14 of the brushless motor 11 has top and bottom surfaces (flat surface parts) 14a, 14b and side surfaces (connection parts) 14c, 14d, 14e, 14f. The top and bottom surfaces 14a and 14b are disposed parallel to each other along flat surfaces (top and bottom surfaces in FIGS. 1 and 2) 1a and 1b extending perpendicular to the output shaft 39 of the motor unit 1. The side surfaces 14c, 14d, 14e, and 14f are disposed in the vertical direction so as to connect the top and bottom surfaces 14a and 14b. The distance between the top and bottom surfaces 14a and 14b is regulated by the width Wd across flats in the right-angle direction to the output shaft 39. The brushless motor 11, including the coil terminals 26, needs to be accommodated within a space defined by a value regulated by the width Wd across flats.

Thus, in the brushless motor 11 according to the present invention, the coil terminals 26 are disposed so as to be distributed to a portion (right side portion in FIG. 2) corresponding to the side surfaces 14c and 14d on one side of the top and bottom surfaces 14a and 14b and a portion (left side portion in FIG. 2) corresponding to the side surfaces 14e and 14f on the other side of the top and bottom surfaces 14a and 14b. That is, one terminal 26 (e.g., coil terminal 26U) and a plurality of coil terminals 26 (e.g., coil terminals 26V and 26W) are disposed on the one side (to the side surface 14d on the one side) and the other side (to the side surfaces 14e and 14f on the other side), respectively, with no coil terminal 26 on the top and bottom surfaces 14a and 14b.

Thus, at least one of the three-phase coil terminals 26U, 26V, and 26W is disposed at a position not adjacent to another coil terminal 26. Further, the coil terminals 26U, 26V, and 26W are disposed on the flange part 17a side at which the screw holes 17b are formed. Further, the coil terminals 26U, 26V, and 26W are disposed such that the corner portion of the coil terminal 26 on the side close to the top and bottom surfaces 14a and 14b does not protrude from a width Wd' (thickness on the side of the width Wd across flats) of the stator core 15. As a result, the outer diameter of the brushless motor 11 can fall within the width Wd across flats, whereby it is possible to reduce size and thickness of the motor according to motor size requirements.

The three-phase coil terminals 26U, 26V, and 26W are thus distributed to three positions, whereby it is possible to reduce the area of the coil terminal 26 protruding from the stator core 15 in the radial direction. That is, the protruding area per coil terminal is reduced to thereby make it possible to increase the consecutive section modulus of the insulator 24 and, correspondingly, the rigidity of the insulator 24 can be enhanced. Further, the reduction in the protruding area of the insulator 24 per coil terminal allows increase in the thickness of the frame 17 to which the stator assembly is assembled, which in turn can enhance the rigidity of the frame 17.

### (2) Coil Terminal Position

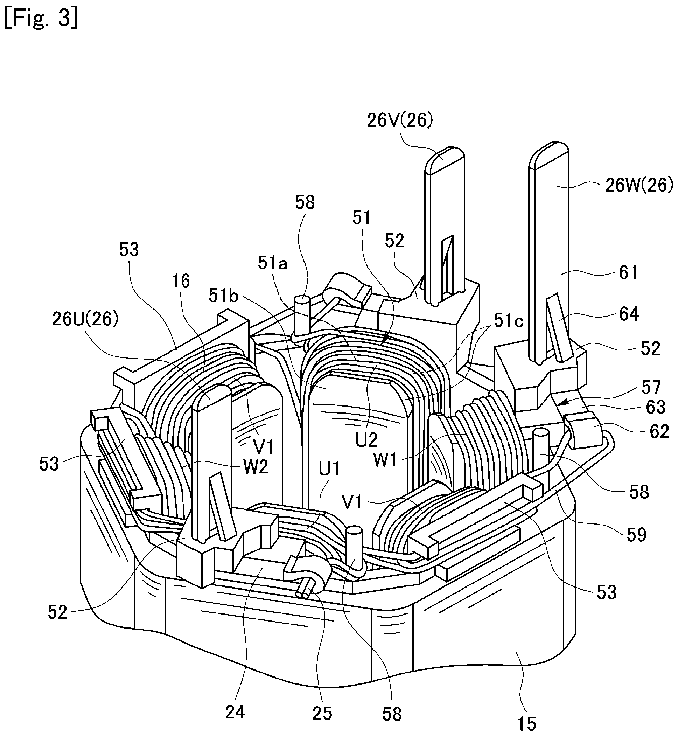

In the brushless motor 11, the three-phase coil terminals 26U, 26V, and 26W are disposed radially outside the coils 16. In this case, there is no dimensional margin behind the coil on the sides of the top and bottom surfaces 14a and 14b, and thus the coil terminal 26 is disposed at three of four positions corresponding to the side surfaces 14c, 14d, 14e and 14f. FIG. 3 is an explanatory view of the configuration of the stator 12 in the brushless motor 11, which illustrates the coil terminal 26 and a winding state of the coil 16.

As illustrated in FIG. 3, the insulator 24 is provided with a coil winding part 51 around which the coil 16 is wound and a terminal mounting part 52 to which the coil terminal 26 is mounted. The insulator 24 has an insulating function and a function of retaining the coil terminal 26, and the brushless motor 11 adopts an "insulator/terminal holder integrated" configuration. The integration of the insulator and terminal holder eliminates the need of assembling an electrical connection component. This allows reduction in assembling man-hours and the number of components and further allows reduction in assembling dimensional error of the coil terminal.

Three terminal mounting parts 52 are formed behind, i.e., radially outside their corresponding coil winding parts 51. A wall-shaped coil guide part 53 is formed behind the coil winding part 51 behind which the terminal mounting part 52 is absent. Disposing the coil terminal 26 radially outside the coil 16 eliminates the need for a nozzle for coil winding to perform "operation for avoiding the terminal" at the time of winding the coil 16. As a result, a winding work is made efficient, thereby making it possible to reduce production man-hours for the stator.

### (3) Coil Terminal Mounting Part Structure in Insulator

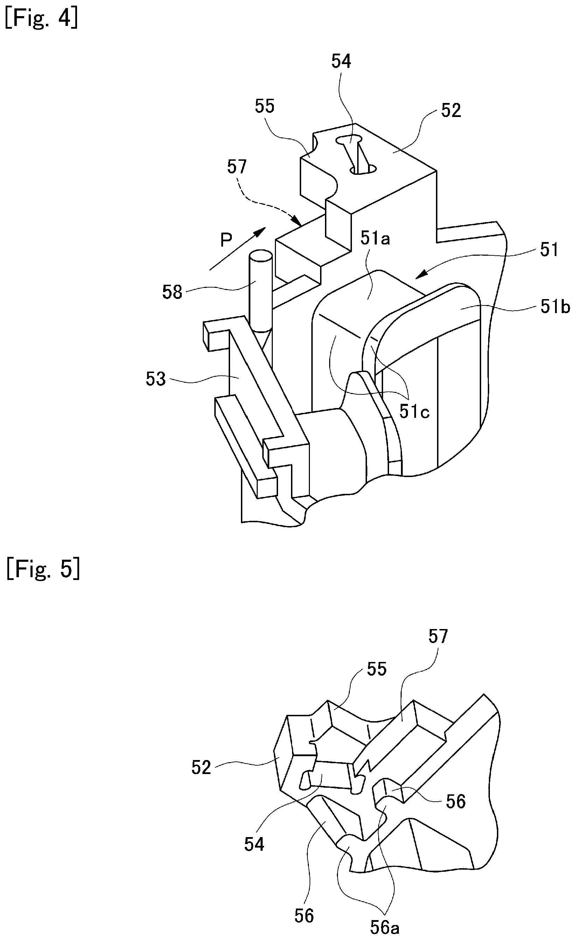

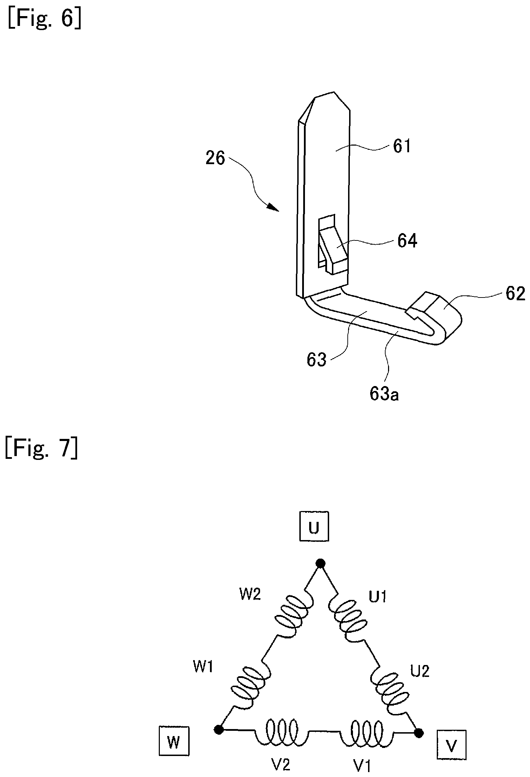

FIG. 4 is an explanatory view illustrating the configuration of the terminal mounting part 52 in the insulator 24, and FIG. 5 is an explanatory view illustrating the terminal mounting part 52 as viewed in the direction of the arrow P of FIG. 4. FIG. 6 is a perspective view illustrating the configuration of the coil terminal 26. As illustrated in FIG. 4, a terminal insertion hole 54 through which the coil terminal 26 is inserted is formed in the terminal mounting part 52. The coil terminal 26 is inserted from below of Fig. 4 into the terminal insertion hole 54. The coil terminal 26 is a male terminal and is constituted of an insertion part 61 to be inserted into the terminal insertion hole 54, a hook part 62 connected with the coil 16, and an intermediate part 63 connecting the hook part 62 and the insertion part 61, as illustrated in FIG. 6. The insertion part 61 has an engagement pawl 64. When the insertion part 61 is inserted into the terminal insertion hole 54, the tip end of the engagement pawl 64 is engaged with a terminal holding part 55 formed in the terminal mounting part 52 so as to protrude, whereby the coil terminal 26 is fixed to and prevented from coming off the terminal mounting part 52.

As illustrated in FIG. 5, a rib 56 extending from the insulator body side is formed at the back side (indicated by the arrow P) of the terminal mounting part 52. A bottom surface 56a of the rib 56 abuts against the end face of the stator core 15. The coil terminal 26 is fitted to the intermediate terminal 43 when the brushless motor 11 is assembled to the frame 17 and, at this time, receives a load from the intermediate terminal 43 side. The rib 56 is provided for receiving the insertion load, and the terminal mounting part 52 is supported by the rib 56 when the terminals are connected to each other. Thus, the terminal mounting part 52 is enhanced in rigidity and is thus unlikely to be deformed even when receiving the insertion load through the engagement pawl 64. This facilitates the connection work between the coil terminal 26 and the intermediate terminal 43 and prevents breakage of the terminal mounting part 52 due to the insertion load, resulting in improvement in reliability.

The terminal mounting part 52 further has a terminal guide part 57 for holding the intermediate part 63 of the coil terminal 26. As illustrated in FIGS. 4 and 5, the terminal guide part 57 is formed in the vicinity of the lower end of the terminal insertion hole 54 so as to face the terminal insertion hole 54. When the coil terminal 26 is inserted into the terminal insertion hole 54, the terminal guide part 57 and a side surface 63a of the intermediate part 63 abut against each other. At coil winding, a tensile force is applied to the hook part 62 of the coil terminal 26, and the terminal may be bent by the tensile force of the winding 25. On the other hand, in the brushless motor 11 of the present invention, the intermediate part 63 connecting the hook part 62 and the insertion part 61 is supported by the terminal guide part 57 of the insulator 24, and movement of the intermediate part 63 is restricted. Thus, even when the tensile force is applied to the hook part 62, the intermediate part 63 is prevented from being pulled and bent by the tensile force, whereby yield and reliability of the product can be improved.

In addition, the coil winding part 51 of the insulator 24 has a winding part 51a around which the winding 25 is wound and a flange part 51b formed on the inner diameter side of the winding part 51a. A round chamfered curved surface part 51c is formed in the corner portions of each of the winding part 51a and flange part 51b as a clearance for a nozzle in consideration of the nozzle route at coil winding. Forming the curved surface part 51c in the corner portions allows the nozzle to be operated at a position closer to the winding part 51a to thereby reduce nozzle operation distance, which can increase a winding speed and reduce production man-hours.

### (4) Coil Winding Order

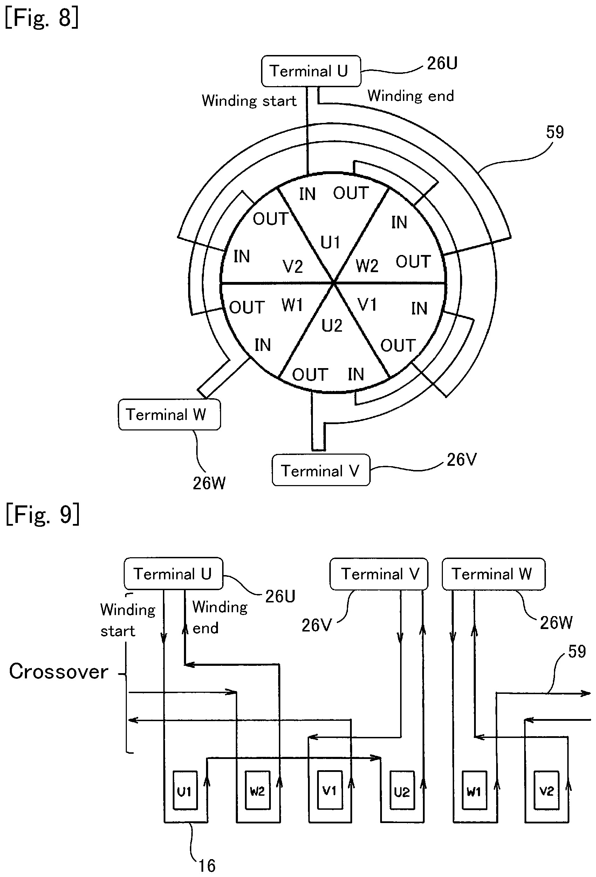

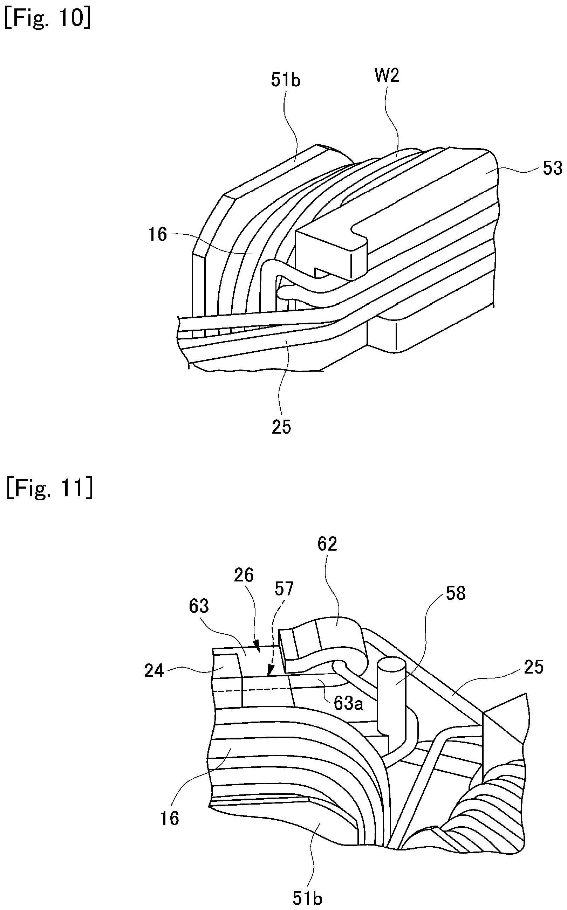

FIG. 7 is a connection diagram of the coil 16, FIG. 8 is an explanatory view illustrating a winding state of the coil 16, and FIG. 9 is a developed winding diagram of the coil 16. As illustrated in FIG. 7, the coils 16 are delta-connected and are wound with a single stroke wherein winding for all the slots is completed between a winding start and a winding end. As illustrated in FIGS. 8 and 9, the winding work is performed in the following order with the coil terminal 26U provided alone to the side surface 14d on the one side as a starting point:
(a) A U-phase first coil U1 is wound from the coil terminal 2 6U;
(b) After winding of the U1, a U-phase second coil U2 opposite to the U1 is wound with two tooth parts 22 interposed therebetween;
(c) After winding of the U2, the winding 25 from the U2 is connected to the coil terminal 26V, and then a V-phase first coil V1 adjacent to the U2 is wound;
(d) After winding of the V1, a V-phase second coil V2 opposite to the V1 is wound with two tooth parts 22 interposed therebetween;
(e) After winding of the V2, the winding 25 from the V2 is connected to the coil terminal 26W, and then a W-phase first coil W1 adjacent to the V2 is wound;
(f) After winding of the W1, a W-phase second coil W2 opposite to the W1 is wound with two tooth parts 22 interposed therebetween; and
(g) After winding of the W2, the winding 25 is connected to the coil terminal 26U adjacent to the W2. As illustrated in FIG. 10, in the coil W2 which is the last coil to be subjected to the winding work, the entrance of the winding start and exit of the winding end are set at the same position in order to maintain the
tensile force of the winding 25.

That is, in the brushless motor 11, starting from the coil terminal existing alone, opposing same-phase coils 16 are wound ((b), (d), (f)), followed by adjacent different-phase coils ((c), (e)). As described above, in the brushless motor 11 of the present invention, the terminal holder-integrated insulator is assembled to the stator core 15 having an integrated core structure, and the coils 16 are wound with a single stroke and delta-connected, thus eliminating the need to perform an assembly process of an electrical connection component and winding connection processing. As a result, the number of processes for production can be reduced to thereby allow cost reduction.

As illustrated in FIG. 11, when the above winding connection is performed, the winding 25 is hooked to a pole 58 provided in the vicinity of each terminal mounting part 52 of the insulator 24. By making the winding 25 be along the pole 58 during the single-stroke winding, a tensile force can be applied to the winding 25 when the winding 25 is locked to the hook part 62. This can enhance adhesion between the coil terminal 26 and the winding 25, thereby making it possible to improve electric connectivity when, e.g., fusing is performed.

Further, in the winding process (d), when the winding 25 is routed from the V1 to V2, a crossover 59 of the winding 25 strides over the U1 in which the winding has already been completed. Since the coil terminal 26U exists radially outside the coil U1, the crossover cannot be routed behind the coil U1. Further, when the crossover exists before routing, the winding work of the coil U1 is very difficult to perform. On the other hand, according to the above-described winding process, the crossover is routed after coil formation, so that the winding work can be performed without any particular difficulty. Further, unlike a general single-stroke winding, there exists an area where the crossover passes in a chord shape over the coil in which the winding has already been completed, so that the length of the crossover can be reduced. At the other coil terminals 26V and 26W, the crossover 59 does not pass behind the 26V and 26W but is hooked to the hook part 62 and routed toward the adjacent coil 16 on the hook part 62 side, so that no problem occurs as to the routing of the crossover.

In addition, in the brushless motor 11, the number of overlapping crossovers 59 is suppressed four at a maximum at the crossovers overlapping area. For example, in the motor disclosed in JP 2013-70577 A, there exists an area where six crossovers overlap, complicating accommodation or routing of the winding 25. On the other hand, in the brushless motor 11, the number of overlapping crossovers 59 is four at a maximum, thus facilitating accommodation/holding of the crossover, so that it is possible to reduce the size/weight of the insulator.

### (5) Arrangement of Intermediate Terminals

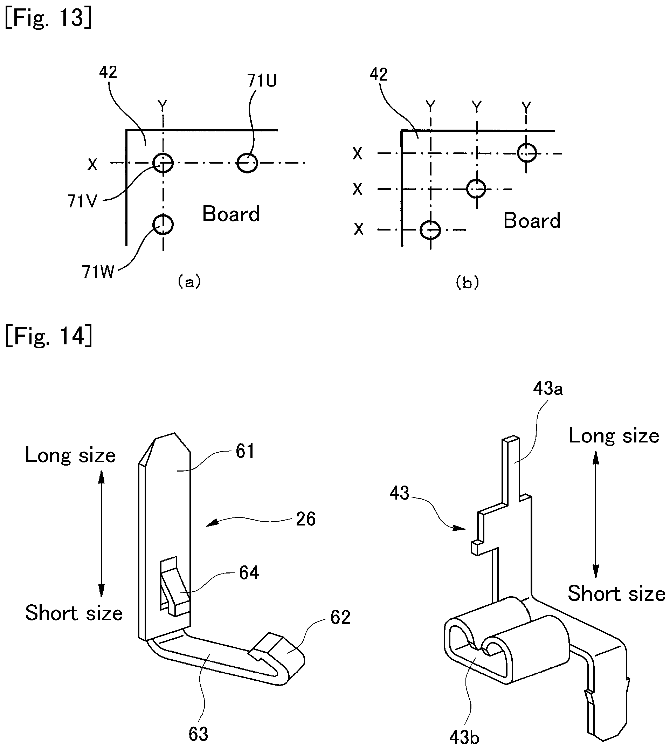

As described above, in the motor unit 1, the brushless motor 11 and the control board 42 are electrically connected by connecting the coil terminal 26 and the intermediate terminal 43. FIG. 12 is an explanatory view illustrating the connection configuration between the coil terminal 26 and the intermediate terminal 43, and FIG. 13 (a) is an explanatory view illustrating the positions of terminal connection parts 71 (71U, 71V, 71W) in the motor unit 1. At the terminal connection parts 71U, 71V, and 71W, the insertion parts 61 of the respective coil terminals 26U, 26V, and 26W and fitting parts 43b of the respective intermediate terminals 43U, 43V, and 43W are connected.

In general, an electromechanically integrated motor unit with a speed reduction mechanism is provided with a motor-side terminal and a control board-side terminal, and the connection layout of the both terminals is an important element to determine the physical size or structure of the motor. In recent years, as to a sunroof motor, there has been a shift in terms of structure, from a brush motor to a brushless motor and, correspondingly, the number of connection portions between the terminals is increased from two to three. However, the size of a device frame cannot be enlarged despite the increase in the number of the terminals and, in such circumstances, it is very difficult for three terminals to be laid out in the present space.

Thus, in the motor unit 1 of the present invention, two of the three connection portions (71U, 71V, 71W) between the terminals are arranged so as to overlap each other in the vertical direction as viewed in the extending direction of the output shaft 39. That is, as illustrated in FIG. 13A, of the terminal connection parts 71U, 71V, and 71W, the two terminal connection parts (71U and 71V) are arranged on an axis (axis X: first axis) perpendicular to the motor rotary shaft 31 as viewed from the control board 42 positioned above the terminals. Further, another pair of the terminals (71V and 71W) are arranged on an axis (axis Y: second axis) perpendicular (parallel to the rotary shaft 31) to the axis X. Further, when the terminal connection parts 71U, 71V, and 71W are viewed in the extending direction of the rotary shaft 31 from the frame 17 side, two pairs of the terminals (e.g., 71U and 71V, 71V and 71W in Fig. 13) are arranged in a line so as
to overlap in the vertical and lateral directions, respectively.

When the terminal connection parts 71 are thus arranged, both the number of X-coordinates and the number of Y-coordinates on the control board 42 can be reduce to one. Thus, as compared to a case (FIG. 13B) where the three connection parts are arranged at random, the layout area of the terminal connection parts 71 is finely arranged (in the case of FIG. 13B, both the numbers of X-coordinates and the number of Y-coordinates are three). As a result, the connection parts between the coil terminals 26 and the intermediate terminals 43 can be efficiently laid out in a small space, thereby facilitating production of the control board 42 connected with the intermediate terminals 43.

Further, in the motor unit 1, the relationship among the lengths of the insertion parts 61 of the respective coil terminals 26U, 26V, and 26W and the relationship among the lengths of the respective intermediate terminals 43U, 43V, and 43W from the fitting parts 43b to the leading ends of the board connection parts 43a are each represented by "long length × 1 and short length × 2". FIG. 14 is an explanatory view illustrating the difference between the long length and the short length of each of the coil terminal 26 and intermediate terminal 43. As illustrated in FIG. 12, in the present embodiment, on the coil terminal 26 side, the 26U has a long length, while the 26V and 26W have a short length; on the intermediate terminal 43 side, the 43V has a long length, while the 43U and 43W have a short length. The coil terminals 26U, 26V and 26W extend from the brushless motor 11 along the extending direction of the rotary shaft 31 with a different length. Then, the 26U (long length) and the 43U (short length) are connected at the terminal connection part 71U, the 26V (short length) and the 43V (long length) are connected at the terminal connection part 71V, and the 26W (short length) and the 43W (short length) are connected at the terminal connection part 71W.

When the coil terminals 26 and intermediate terminals 43 are arranged in such a manner, the long male terminal 26U is disposed at the near side (upper side), and the short male terminals 26V and 26W are disposed at the far side (lower side: the side of the bottom surface 1b of the frame 17) when viewed from the frame 17 side. Here, a process of connecting the coil terminals 26 and intermediate terminals 43 is considered. First, the 26U having a larger extending length and its corresponding 43U are connected. That is, the long male terminal 26U is connected to the 43U before other short male terminals are connected to their corresponding terminals. In general, the long terminal is more likely to undergo positional deviation at its leading end position than the short terminal, and it is not easy to perform connection of the plurality of terminals without any trouble in a state where long and short terminals coexist. Further, when a plurality of terminals having the same length exist, they may be erroneously assembled.

In the motor unit 1 according to the present invention, when performing connection of the terminals 26 ad 44, the long male terminal 26U positioned at the near side is connected first, and then the short male terminals 26V and 26W positioned at the far side are connected. As a result, in the terminal connection work, it is possible to perform connection of the short male terminals 26V and 26W while confirming the insertion state of the long male terminal 26U. Thus, whether the insertion of the long male terminal is completed can be easily visually confirmed and, thereafter, the short male terminal can be connected reliably, whereby it is possible to prevent bending of the terminal and erroneous assembly between the terminals.

The present invention is not limited to the above embodiment and may be variously modified without departing from the spirit of the invention.

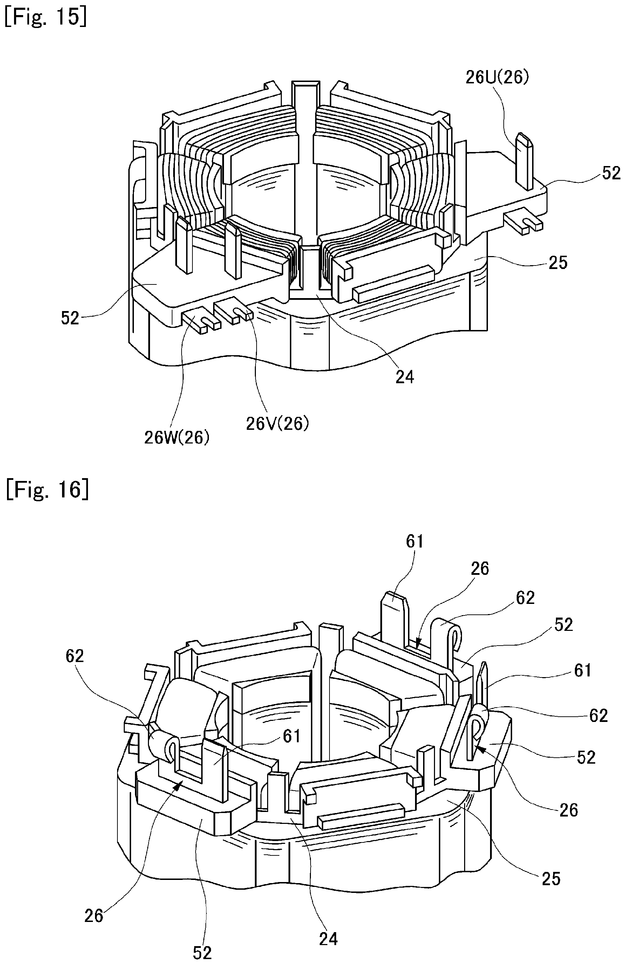

For example, in the above embodiment, three terminal mounting parts 52 are provided; however, as illustrated in FIG. 15, the number of the terminal mounting parts 52 may be reduced to two by connecting two phases in a single terminal mounting part. Further, the shape of the coil terminal 26 is not limited to that described above and, for example, as illustrated in FIG. 16, the insertion part 61 and the hook part 62 may extend in the same direction. However, in the case of FIGS. 15 and 16 as well, the stator 12, including the coil terminals 26, needs to satisfy the size requirement of the width Wd across flats.

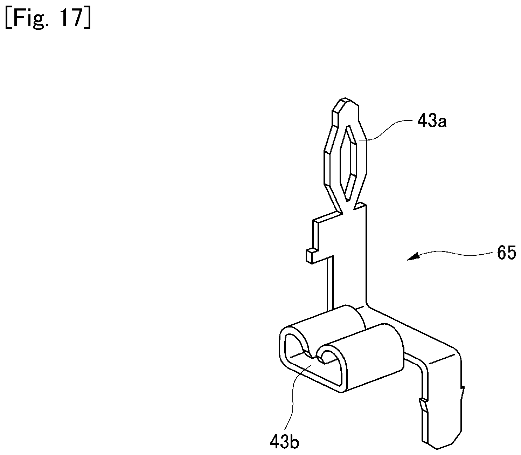

Further, in the above embodiment, the intermediate terminal 43 is soldered to the control board 42; however, the intermediate terminal 65 as illustrated in FIG. 17 and the control board 42 may be connected by press-fitting. Specifically, in this case, the control board 42 is fitted to the cover 18, and then the cover 18 is fitted to the frame 17. At this timing, the intermediate terminal 65 and the control board 42 are connected by press-fitting.

In addition, the number of tooth parts/slots in the brushless motor 11 is illustrative only and not limited to six. Further, IN/OUT in the winding order may be reversed. Similarly, the winding order between the three-phases (U, V, W) may be arbitrarily determined and, for example, the winding order may be U->W->V in the counterclockwise direction. Further, a combination of the three phases (U, V, W) at the terminal connection part 71 is not limited to that described above and may be arbitrarily determined.

### Industrial Applicability

The present invention may be widely applied, in addition to the sunroof motor, to an on-vehicle motor used as a drive source for, e.g., a power window, a slide door, a rear gate, or an oil pump, various electric appliances such as home electric appliances, or industrial equipment such as a robot or an electric machine.

### Reference Signs List

1: Motor unit
1a: Top surface
1b: Bottom surface
2: Motor part
3: Speed reduction mechanism part
4: Control part
11: Brushless motor
12: Stator
13: Rotor
14: Motor case
14a: Top surface
14b: Bottom surface
14c to 14f: Side surface
15: Stator core
16: Coil
17: Frame
17a: Flange part
17b: Screw hole
17c: Bearing holding part
17d: Bearing holding part
17e: Terminal holding part
18: Cover
19: Screw
21: Yoke part
22: Tooth part
23: Slot
24: Insulator
25: Winding
26: Coil terminal (coil connection terminal)
26U, 26V, 26W: Coil terminal
31: Rotary shaft
32: Rotor core
33: Magnet
34: Bearing
35: Bearing metal
37: Worm
38: Worm wheel
39: Output shaft
41: Sensor magnet
42: Control board
43: Intermediate terminal
43U, 43V, 43W: Intermediate terminal
43a: Board connection part
43b: Fitting part
51: Coil winding part
51a: Winding part
51b: Flange part
51c: Curved surface part
52: Terminal mounting part
53: Coil guide part
54: Terminal insertion hole
55: Terminal holding part
56: Rib
56a: Bottom surface
57: Terminal guide part
58: Pole
59: Crossover
61: Insertion part
62: Hook part
63: Intermediate part
63a: Side surface
64: Engagement pawl
65: Intermediate terminal
71: Terminal connection part
71U, 71V, 71W: Terminal connection part
U1: U-phase first coil
U2: U-phase second coil
V1: V-phase first coil
V2: V-phase second coil
W1: W-phase first coil
W2: W-phase second coil
Wd: Width across flats
Wd': Width of stator core

## Claims

1. A motor with a speed reduction mechanism (3), comprising:
a three-phase driven brushless motor, the brushless motor comprising:
a stator (12) having a motor case (14), formed of a magnetic material, a stator core (15) fixed to the inner peripheral side of the motor case (14), and a coil (16) wound around the stator core (15); and
a rotor (13) having a magnet (33) and rotatably disposed in the stator (12), wherein
the motor case (14) having two parallel opposing flat surface parts (14a, 14b) opposing each other in a direction perpendicular to the axis of rotation of the rotor (13), and connection parts (14c, 14d, 14e, 14f) provided at both sides of the flat surface parts (14a, 14b) and connecting the flat surface parts (14a, 14b),
the stator (12) has an insulator (24) having three coil connection terminals (26U, 26V, 26W) connected with the winding (25),
one of the three coil connection terminals (26U) is disposed on one connection part (14c, 14d, 14e, 14f) side with respect to the flat surface parts (14a, 14b) and the remaining two coil connection terminals (26V, 26W) are disposed on the other connection part (14c, 14d, 14e, 14f) side with respect to the flat surface parts (14a, 14b);
a frame (17) mounted with the brushless motor and accommodating therein a speed reduction mechanism (3) and a control circuit, the speed reduction mechanism (3) being connected to a rotary shaft (31) of the brushless motor, speed-reducing rotation of the rotary shaft (31), and outputting the speed-reduced rotation to an output shaft (39), the control circuit being provided for controlling drive of the brushless motor; and
three intermediate terminals (43U, 43V, 43W) fitted to the frame (17) and each having one end electrically connected to the coil connection terminal (26U, 26V, 26W) and the other end electrically connected to the control circuit,
wherein the two coil connection terminals (26U, 26V, 26W) disposed on the other connection part (14c, 14d, 14e, 14f) side with respect to the flat surface parts (14a, 14b) extend along the extending direction of the rotary shaft (31) of the brushless motor from the end portion of the brushless motor with different lengths, and
a shorter one of the two coil connection terminals (26U, 26V, 26W) having different extending lengths is disposed closer to the bottom surface side of the frame (17) than the longer one is.

2. The motor according to claim 1, **characterized in that** one of the coil connection terminals (26U, 26V, 26W) is disposed at a position not adjacent to other coil connection terminals (26U, 26V, 26W).

3. The motor according to claim 1 or 2, **characterized in that**
the insulator (24) has coil winding parts (51) around each of which the winding (25) is wound and terminal mounting parts (52) each mounted with the coil connection terminal (26U, 26V, 26W), and
the terminal mounting parts (52) are disposed radially outside the coil winding parts (51).

4. The motor according to claim 3, **characterized in that**
the terminal mounting parts (52) are disposed radially outside the coil winding part (51), and
a guide part (53) for guiding the winding (25) is formed radially outside the coil winding part (51) behind which the terminal mounting part (52) is absent.

5. The motor according to claim 3 or 4, **characterized in that**
the coil connection terminal (26U, 26V, 26W) has an insertion part (61) inserted into a terminal insertion hole (54) formed in the terminal mounting part (52), a hook part (62) connected with the winding (25), and an intermediate part (63) connecting the hook part (62) and the insertion part (61), and
the terminal mounting part (52) has a terminal guide part (57) formed in the vicinity of the terminal insertion hole (54) and holding the intermediate part (63) of the coil connection terminal (26U, 26V, 26W) abutting thereagainst.

6. The motor according to any one of claims 1 to 5, **characterized in that**
the winding (25) includes, starting from the coil connection terminal (26U, 26V, 26W) of a first phase disposed on the one connection part (14c, 14d, 14e, 14f) side, a first-phase first coil existing at a position corresponding to the first-phase coil connection terminal (26U, 26V, 26W), a first-phase second coil positioned opposite to the first-phase first coil, a second-phase first coil adjacent to the first-phase second coil, a second-phase second coil opposite to the second-phase first coil, a third-phase first coil adjacent to the second-phase second coil, and a third-phase second coil opposite to the third-phase first coil, and
the first-phase first coil, first-phase second coil, second-phase first coil, second-phase second coil, third-phase first coil, and third-phase second coil are formed continuously.

7. The motor according to claim 6, **characterized in that**
the winding (25) is connected to the coil connection terminal (26U, 26V, 26W) of a second phase between the first-phase second coil and the second-phase first coil, connected to the coil connection terminal (26U, 26V, 26W) of a third phase between the second-phase second coil and the third-phase first coil, and connected to the first-phase coil connection terminal (26U, 26V, 26W) at the rear stage of the third-phase second coil.

8. The motor according to any one of claims 1 to 7, **characterized in that**
two of the three intermediate terminals (43U, 43V, 43W) are arranged on a first axis perpendicular to the rotary shaft (31), and another pair of the terminals (43U, 43V, 43W) are arranged on a second axis perpendicular to the first axis.

9. The motor according to any one of claims 1 to 7, **characterized in that**
two of the three intermediate terminals (43U, 43V, 43W) are arranged on a first axis perpendicular to the rotary shaft (31) of the brushless motor, and another pair of the terminals (43U, 43V, 43W) are arranged on a second axis perpendicular to the first axis.

10. The motor with speed reduction mechanism (3) according to any one of claims 1 to 9, **characterized in that**
the frame (17) has a terminal holding part (17e) that holds the intermediate terminal (43U, 43V, 43W) and a bearing holding part (17c, 17d) that holds a bearing (34) that rotatably supports the rotary shaft (31) of the brushless motor, and
the terminal holding part (17e) and bearing holding part (17c, 17d) are disposed so as to be deviated from each other in the rotary shaft (31) direction.

## Patentansprüche

1. Motor mit einem Drehzahlverminderungsmechanismus (3), umfassend:
einen dreiphasig angetriebenen bürstenlosen Motor, wobei der bürstenlose Motor Folgendes umfasst:
einen Stator (12), der ein Motorgehäuse (14), das aus einem magnetischen Material gebildet ist, einen Statorkern (15), der an der inneren Umfangsseite des Motorgehäuses (14) befestigt ist, und eine Spule (16), die um den Statorkern (15) gewickelt ist, aufweist; und
einen Rotor (13), der einen Magneten (33) aufweist und drehbar im Stator (12) angeordnet ist, wobei
das Motorgehäuse (14) zwei parallele, einander gegenüberliegende flache Oberflächenteile (14a, 14b) aufweist, die einander in einer Richtung senkrecht zur Drehachse des Rotors (13) gegenüberliegen, und Verbindungsteile (14c, 14d, 14e, 14f), die an beiden Seiten der flachen Oberflächenteile (14a, 14b) vorgesehen sind und die flachen Oberflächenteile (14a, 14b) verbinden,
der Stator (12) einen Isolator (24) mit drei Spulenverbindungsanschlüssen (26U, 26V, 26W) aufweist, die mit der Wicklung (25) verbunden sind,
einer der drei Spulenverbindungsanschlüsse (26U) auf einer Seite des Verbindungsteils (14c, 14d, 14e, 14f) in Bezug auf die flachen Oberflächenteile (14a, 14b) angeordnet ist und die verbleibenden zwei Spulenverbindungsanschlüsse (26V, 26W) auf der anderen Seite des Verbindungsteils (14c, 14d, 14e, 14f) in Bezug auf die flachen Oberflächenteile (14a, 14b) angeordnet sind;
einen Rahmen (17), der an den bürstenlosen Motor montiert ist und in dem ein Drehzahlverminderungsmechanismus (3) und eine Regelschaltung untergebracht sind, wobei der Drehzahlverminderungsmechanismus (3) mit einer Drehwelle (31) des bürstenlosen Motors verbunden ist, die Drehzahl einer Drehung der Drehwelle (31) vermindert und die drehzahlverminderte Drehung an eine Ausgangswelle (39) ausgibt, wobei die Regelschaltung zum Regeln des Antriebs des bürstenlosen Motors vorgesehen ist; und
drei Zwischenanschlüsse (43U, 43V, 43W), die am Rahmen (17) angebracht sind und jeweils mit einem Ende elektrisch mit dem Spulenverbindungsanschluss (26U, 26V, 26W) verbunden sind und mit dem anderen Ende elektrisch mit der Regelschaltung verbunden sind,
wobei die beiden Spulenverbindungsanschlüsse (26U, 26V, 26W), die auf der anderen Seite des Verbindungsteils (14c, 14d, 14e, 14f) in Bezug auf die flachen Oberflächenteile (14a, 14b) angeordnet sind, sich entlang der Erstreckungsrichtung der Drehwelle (31) des bürstenlosen Motors von dem Endabschnitt des bürstenlosen Motors mit unterschiedlichen Längen erstrecken, und
ein kürzerer der beiden Spulenverbindungsanschlüsse (26U, 26V, 26W) mit unterschiedlichen Erstreckungslängen näher an der unteren Oberflächenseite des Rahmens (17) angeordnet ist als der längere.

2. Motor nach Anspruch 1, **dadurch gekennzeichnet, dass**
einer der Spulenverbindungsanschlüsse (26U, 26V, 26W) an einer Position angeordnet ist, die nicht neben anderen Spulenverbindungsanschlüssen (26U, 26V, 26W) liegt.

3. Motor nach Anspruch 1 oder 2, **dadurch gekennzeichnet, dass**
der Isolator (24) Spulenwicklungsteile (51), um die jeweils die Wicklung (25) gewickelt ist, und Anschlussbefestigungsteile (52) aufweist, die jeweils an den Spulenverbindungsanschluss (26U, 26V, 26W) montiert sind, und
die Anschlussbefestigungsteile (52) radial außerhalb der Spulenwicklungsteile (51) angeordnet sind.

4. Motor nach Anspruch 3, **dadurch gekennzeichnet, dass**
die Anschlussbefestigungsteile (52) radial außerhalb des Spulenwicklungsteils (51) angeordnet sind, und
ein Führungsteil (53) zum Führen der Wicklung (25) radial außerhalb des Spulenwicklungsteils (51) ausgebildet ist, hinter dem das Anschlussbefestigungsteil (52) nicht vorhanden ist.

5. Motor nach Anspruch 3 oder 4, **dadurch gekennzeichnet, dass**
der Spulenverbindungsanschluss (26U, 26V, 26W) ein Einfügeteil (61), das in ein Anschlusseinfügeloch (54) eingefügt ist, das in dem Anschlussbefestigungsteil (52) ausgebildet ist, ein Hakenteil (62), das mit der Wicklung (25) verbunden ist, und ein das Hakenteil (62) und das Einfügeteil (61) verbindende Zwischenteil (63) aufweist, und
das Anschlussbefestigungsteil (52) ein Anschlussführungsteil (57) aufweist, das in der Nähe des Anschlusseinfügelochs (54) ausgebildet ist und das Zwischenteil (63) des Spulenverbindungsanschlusses (26U, 26V, 26W) daran anliegend hält.

6. Motor nach einem der Ansprüche 1 bis 5, **dadurch gekennzeichnet, dass**
die Wicklung (25) ausgehend von dem Spulenverbindungsanschluss (26U, 26V, 26W) einer ersten Phase, der auf der Seite des einen Verbindungsteils (14c, 14d, 14e, 14f) angeordnet ist, eine erste Spule der ersten Phase, die an einer Position vorhanden ist, die dem Spulenverbindungsanschluss (26U, 26V, 26W) der ersten Phase entspricht, eine zweite Spule der ersten Phase, die gegenüber der ersten Spule der ersten Phase angeordnet ist, eine erste Spule der zweiten Phase, die an die zweite Spule der ersten Phase angrenzt, eine zweite Spule der zweiten Phase, die der ersten Spule der zweiten Phase gegenüberliegt, eine erste Spule der dritten Phase, die an die zweite Spule der zweiten Phase angrenzt, und eine zweite Spule der dritten Phase, die der ersten Spule der dritten Phase gegenüberliegt, einschließt, und
die erste Spule der ersten Phase, die zweite Spule der ersten Phase, die erste Spule der zweiten Phase, die zweite Spule der zweiten Phase, die erste Spule der dritten Phase und die zweite Spule der dritten Phase kontinuierlich ausgeführt sind.

7. Motor nach Anspruch 6, **dadurch gekennzeichnet, dass**
die Wicklung (25) mit dem Spulenverbindungsanschluss (26U, 26V, 26W) einer zweiten Phase zwischen der zweiten Spule der ersten Phase und der ersten Spule der zweiten Phase verbunden ist, mit dem Spulenverbindungsanschluss (26U, 26V, 26W) einer dritten Phase zwischen der zweiten Spule der zweiten Phase und der ersten Spule der dritten Phase verbunden ist, und mit dem Spulenverbindungsanschluss (26U, 26V, 26W) der ersten Phase an der hinteren Stufe der zweiten Spule der dritten Phase verbunden ist.

8. Motor nach einem der Ansprüche 1 bis 7, **dadurch gekennzeichnet, dass**
zwei der drei Zwischenanschlüsse (43U, 43V, 43W) auf einer ersten Achse senkrecht zur Drehwelle (31) angeordnet sind und ein weiteres Paar der Anschlüsse (43U, 43V, 43W) auf einer zweiten Achse senkrecht zur ersten Achse angeordnet ist.

9. Motor nach einem der Ansprüche 1 bis 7, **dadurch gekennzeichnet, dass**
zwei der drei Zwischenanschlüsse (43U, 43V, 43W) auf einer ersten Achse senkrecht zur Drehwelle (31) des bürstenlosen Motors angeordnet sind, und ein weiteres Paar der Anschlüsse (43U, 43V, 43W) auf einer zweiten Achse senkrecht zur ersten Achse angeordnet ist.

10. Motor mit Drehzahlverminderungsmechanismus (3) nach einem der Ansprüche 1 bis 9, **dadurch gekennzeichnet, dass**
der Rahmen (17) ein Anschlusshalteteil (17e), das den Zwischenanschluss (43U, 43V, 43W) hält, und ein Lagerhalteteil (17c, 17d) aufweist, das ein Lager (34) hält, das die Drehwelle (31) des bürstenlosen Motors drehbar hält, und
das Anschlusshalteteil (17e) und das Lagerhalteteil (17c, 17d) so angeordnet sind, dass sie in Richtung der Drehwelle (31) voneinander abweichen.

## Revendications

1. Moteur pourvu d'un mécanisme (3) de réduction de vitesse, comprenant :
un moteur sans balai entraîné triphasé, le moteur sans balai comprenant :
un stator (12) présentant un carter (14) de moteur, formé d'un matériau magnétique, un noyau (15) de stator fixé au côté périphérique intérieur du carter (14) de moteur et une bobine (16) enroulée autour d'un noyau (15) de stator ; et
un rotor (13) présentant un aimant (33) et disposé de manière rotative dans le stator (12), dans lequel
le carter (14) de moteur présentant deux parties (14a, 14b) de surface plates opposées parallèles opposées l'une à l'autre dans une direction perpendiculaire à l'axe de rotation du rotor (13), et des parties (14c, 14d, 14e, 14f) de connexion situées au niveau des deux côtés des parties (14a, 14b) de surface plates et reliant les parties (14a, 14b) de surface plates,
le stator (12) présente un isolant (24) présentant trois bornes (26U, 26V, 26W) de connexion de bobine reliées à l'enroulement (25),
l'une des trois bornes (26U) de connexion de bobine est disposée sur un côté de pièce de connexion (14c, 14d, 14e, 14f) par rapport aux parties (14a, 14b) de surface plates et les deux autres bornes (26V, 26W) de connexion de bobine sont disposées sur l'autre côté de pièce de connexion (14c, 14d, 14e, 14f) par rapport aux parties (14a, 14b) de surface plates ;
un bâti (17) monté avec le moteur sans balai et accueillant en lui un mécanisme (3) de réduction de vitesse et un circuit de commande, le mécanisme (3) de réduction de vitesse étant relié à un arbre rotatif (31) du moteur sans balai, réduisant la vitesse de rotation de l'arbre rotatif (31) et délivrant la rotation réduite en vitesse sur un arbre (39) de sortie, le circuit de commande étant prévu pour commander l'entraînement du moteur sans balai ; et
trois bornes intermédiaires (43U, 43V, 43W) ajustées sur le bâti (17) et présentant chacune une extrémité électriquement reliée à la borne (26U, 26V, 26W) de connexion de bobine et l'autre extrémité électriquement reliée au circuit de commande,
dans lequel les deux bornes (26U, 26V, 26W) de connexion de bobine disposées sur l'autre côté de pièce de connexion (14c, 14d, 14e, 14f) par rapport aux parties (14a, 14b) de surface plates s'étendent le long de la direction d'extension de l'arbre rotatif (31) du moteur sans balai depuis la partie d'extrémité du moteur sans balai sur des longueurs différentes, et
une borne plus courte des deux bornes (26U, 26V, 26W) de connexion de bobine présentant des longueurs d'extension différentes est disposée plus près du côté de la surface de fond du bâti (17) que ne l'est la borne plus longue.

2. Moteur selon la revendication 1, **caractérisé en ce que**
l'une des bornes (26U, 26V, 26W) de connexion de bobine est disposée à une position non adjacente aux autres bornes (26U, 26V, 26W) de connexion de bobine.

3. Moteur selon la revendication 1 ou la revendication 2, **caractérisé en ce que**
l'isolant (24) présente des parties (51) d'enroulement de bobine autour de chacune desquelles est enroulé l'enroulement (25) et des parties (52) de montage de borne montées chacune avec la borne (26U, 26V, 26W) de connexion de bobine, et
les parties (52) de montage de borne sont disposées radialement à l'extérieur des parties (51) d'enroulement de bobine.

4. Moteur selon la revendication 3, **caractérisé en ce que**
les parties (52) de montage de borne sont disposées radialement à l'extérieur de la partie (51) d'enroulement de bobine, et
une partie guide (53) destinée à guider l'enroulement (25) est formée radialement à l'extérieur de la partie (51) d'enroulement de bobine derrière laquelle la partie (52) de montage de borne est absente.

5. Moteur selon la revendication 3 ou la revendication 4, **caractérisé en ce que**
la borne (26U, 26V, 26W) de connexion de bobine présente une partie (61) d'insertion insérée dans un trou (54) d'insertion de borne formé dans la partie (52) de montage de borne, une partie crochet (62) reliée à l'enroulement (25) et une partie intermédiaire (63) reliant la partie crochet (62) et la partie (61) d'insertion, et
la partie (52) de montage de borne présente une partie guide (57) de borne formée à proximité du trou (54) d'insertion de borne et maintenant la partie intermédiaire (63) de la borne (26U, 26V, 26W) de connexion de bobine venant en butée contre elle.

6. Moteur selon l'une quelconque des revendications 1 à 5, **caractérisé en ce que**
l'enroulement (25) inclut, en partant de la borne (26U, 26V, 26W) de connexion de bobine d'une première phase disposée sur le un côté de pièce (14c, 14d, 14e, 14f) de connexion, une première bobine de première phase existant à une position correspondant à la borne (26U, 26V, 26W) de connexion de bobine de première phase, une deuxième bobine de première phase positionnée à l'opposé de la première bobine de première phase, une première bobine de deuxième phase adjacente à la deuxième bobine de première phase, une deuxième bobine de deuxième phase à l'opposé de la première bobine de deuxième phase, une première bobine de troisième phase adjacente à la deuxième bobine de deuxième phase et une deuxième bobine de troisième phase à l'opposé à la première bobine de troisième phase, et
les première bobine de première phase, deuxième bobine de première phase, première bobine de deuxième phase, deuxième bobine de deuxième phase, première bobine de troisième phase et deuxième bobine de troisième phase sont formées en continu.

7. Moteur selon la revendication 6, **caractérisé en ce que**
l'enroulement (25) est relié à la borne (26U, 26V, 26W) de connexion de bobine d'une deuxième phase entre la deuxième bobine de première phase et la première bobine de deuxième phase, relié à la borne (26U, 26V, 26W) de connexion de bobine d'une troisième phase entre la deuxième bobine de deuxième phase et la première bobine de troisième phase, et relié à la borne (26U, 26V, 26W) de connexion de bobine de première phase au niveau de l'étage arrière de la deuxième bobine de troisième phase.

8. Moteur selon l'une quelconque des revendications 1 à 7, **caractérisé en ce que**
deux des trois bornes intermédiaires (43U, 43V, 43W) sont agencées sur un premier axe perpendiculaire à l'arbre rotatif (31), et une autre paire des bornes (43U, 43V, 43W) sont agencées sur un deuxième axe perpendiculaire au premier axe.

9. Moteur selon l'une quelconque des revendications 1 à 7, **caractérisé en ce que**
deux des trois bornes intermédiaires (43U, 43V, 43W) sont agencées sur un premier axe perpendiculaire à l'arbre rotatif (31) du moteur sans balai, et une autre paire des bornes (43U, 43V, 43W) sont agencées sur un deuxième axe perpendiculaire au premier axe.

10. Moteur pourvu d'un mécanisme (3) de réduction de vitesse selon l'une quelconque des revendications 1 à 9, **caractérisé en ce que**
le bâti (17) présente une partie (17e) de maintien de borne qui maintient la borne intermédiaire (43U, 43V, 43W) et une partie (17c, 17d) de maintien de palier qui maintient un palier (34) qui supporte de manière rotative l'arbre rotatif (31) du moteur sans balai, et
les partie (17e) de maintien de borne et partie (17c, 17d) de maintien de palier sont disposées de manière à être écartées l'une de l'autre dans la direction d'arbre rotatif (31).
